# EUROPEAN PATENT APPLICATION

(11) **EP 2 113 856 A1**
(43) Date of publication of application: **04.11.2009**
(21) Application number: 08103770.7
(22) Date of filing: 29.04.2008
(51) Int. Cl.: G06F 21/00

(54) **Secure storage of user data in UICC and Smart Card enabled devices**

(71) Applicant: Tiny Industries ApS, 2750 Ballerup (DK)
(72) Inventor: Kristoffersen, Per, 2920, Charlottenlund (DK)
(74) Representative: Plougmann & Vingtoft A/S

(57) **Abstract**

A system for securing user data in Universal Integrated Circuit Card (referred to as UICC) and/or Smart Card enabled devices. The invention uses a UICC and/or Smart Card to function as a key repository for the UICC/Smart Card enabled device. The device can use encryption keys from the UICC/Smart Card to encrypt/decrypt data stored in the memory of the device, this data could be user data like e-mail, passwords, SMS messages etc.

## Description

### FIELD OF THE INVENTION

The present invention relates generally to mobile devices that are UICC/Smart Card enabled, and to UICC/Smart Cards with a SIM or USIM application. More particular the invention relates to mobile devices that stores user specific data like e-mails and other documents, SMS messages, calendar items etc.

### BACKGROUND OF THE INVENTION

As more and more mobile devices are used to read e-mail, synchronize towards mail systems and calendar systems, the data stored in the mobile devices are getting more and more sensitive to the user. Sensitive data such as business or private e-mails and other documents, SMS messages and calendar information are highly sensitive both for private people and for the companies that they work in, and are only intended for the specific user.

As the number and complexity of features in mobile devices have grown rapidly, the security aspects of the more adapt devices have been forgotten or neglected, the result of this is that millions of mobile devices have highly secret or sensitive data stored in their memory with limited or no security. If a device is stolen or lost, anybody who finds/steels the device can have instant access to all data stored in the device, posing a critical data leak for many businesses.

Historically seen, no mobile devices have been secure enough to store sensitive data therein, for years manufacturers have been trying to make "SIM LOCKS" that would limit the usage of the given device to a specific network provider. These locks have been broken by hackers every time a new device has appeared on the market, and the manufacturers have not been able to stop such hacking. Therefore the memory in the mobile devices cannot be regarded as safe.

### SUMMARY OF THE INVENTION

The present invention proposes a new way of using the UICC/Smart Card to encrypt user data in mobile devices. The UICC/Smart Card will function as a key repository for the mobile device, i.e. it will be capable of safely storing one or more encryption keys and only release a key when certain conditions are fulfilled, such as a user has input a password. The mobile device will be able to use any encryption algorithm to encrypt the data in the device. Mobile devices may be capable of receiving input and/or providing output through wired or wireless transmission or through any appropriate type of data-carrying media.

The invention will add functionality to the UICC/Smart Card that allows any device that is communicating with the UICC/Smart Card to request an encryption key.

The UICC/Smart Card will hold any number of keys and will only give out keys after a password or Personal Identification Number (referred to as PIN) has been successfully verified. The PIN will ensure that only the owner of the mobile device and the UICC/Smart Card will have access to the key repository and any encrypted data stored within the mobile device.

This functionality will link the data stored in a mobile device to the UICC/Smart Card that is present in the device at the time the data is received/stored, and the UICC/Smart Card in directly linked to a specific PIN, that only the owner knows. So the data in the mobile device can then only be accessed and read by the owner of the device, so if the mobile device were to be stolen or lost, nobody else could gain access to the user specific data of the mobile device.

### BRIEF DESCRIPTION OF THE DRAWINGS

Figure 1 is an overview of how a system design could look like for a UICC/Smartcard enabled mobile device;
Figure 2 gives an overview of the system;
Figure 3 gives an example of how the communication flow of the system could be, when encrypting data; and
Figure 4 gives an example of how the communication flow of the system could be when decrypting data.

### DETAILED DESCRIPTION OF THE INVENTION

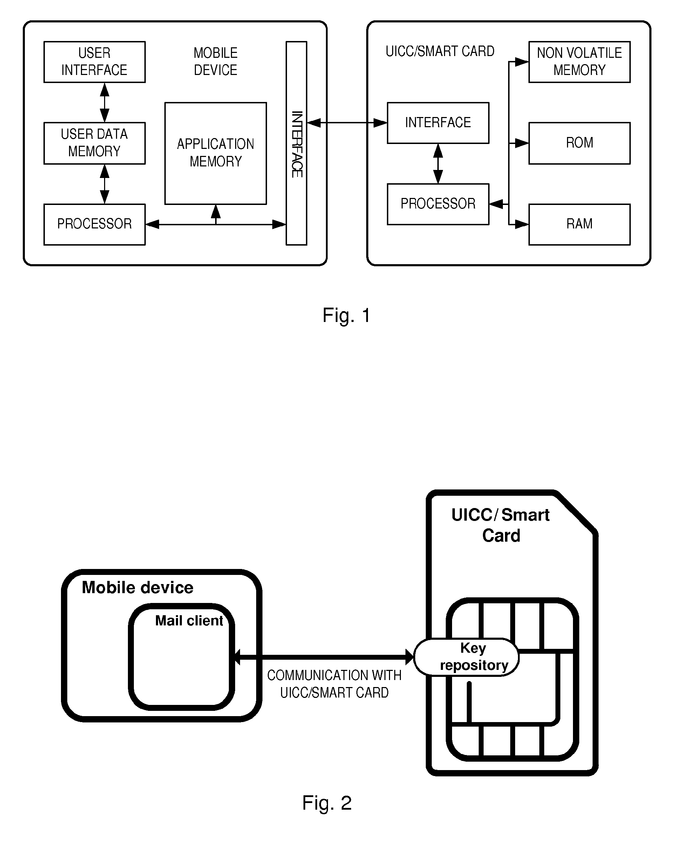

Figure 1 illustrates an embodiment of the present invention a mobile device comprises a processor, a memory for user data, a memory for applications, a user interface, an UICC/Smart card reader and a protocol to communication with the UICC over an interface.

Within the mobile device, in any type of memory, an application will be running. The application will be able to read various types of user data from various memory types. The application will be able to use a Man-Machine Interface such as a keyboard, buttons and screen, referred to as MMI, of the mobile device and receive user inputs.

Different applications installed in the mobile device will be able to either download and/or receive data and/or messages of various types. The mobile device will be able to communicate with a variety of surrounding radio networks using any appropriate type of radio or other wireless communication.

As illustrated in Figure 1 the UICC can have a processor, a communication interface, Random Access Memory (referred to as RAM), Read Only Memory (referred to as ROM) and non volatile memory for applications. Within the UICC an application is stored, either in non volatile memory or other types of memory, with the ability to securely store encryption keys and certificates. This application and/or keys and certificates will be loaded either during production of the card or loaded to the card later during usage of the card after it has been issued to a user.

The encryption keys and/or certificates within the application are preferably generated in a safe environment and not within the UICC. Key and certificates will be generated by machinery/software certified to generate such.

The keys and certificates will be transmitted from the UICC to the mobile device using a protocol where the key/certificate will be hidden. No key or certificate will be transmitted out of the UICC in clear form.

Keys and certificates can only leave the UICC after a user has presented a correct password or PIN. The password or PIN may have to be presented at predetermined intervals, and a maximum time interval between verification should set accordingly within the UICC.

The mobile device will receive data messages of various type, and request keys or certificates from the UICC, the received data will then be encrypted with the given key or certificated.

A key or certificate ID will be stored along with the encrypted data.

The mobile device application will be able to decrypt data, using the key or certificate ID stored with the encrypted data. The mobile device application will be able to decrypt parts of the encrypted data, as well as whole blocks of encrypted data, and display this to the user or use it in memory.

The mobile device will be able to request information about the keys and certificates, so that the key and certificates can be used in the correct or most appropriate way.

In another embodiment the mobile device will be a laptop computer. The laptop will have the UICC inserted in a built-in or external card reader.

The user will be able to use the encryption keys and certificates via a Graphical User Interface (referred to as a GUI). The user will be able to pick single or multiple files from the laptop memory units and choose to encrypt the files with a key from the UICC.

The GUI will prompt the user for password or PIN, in order to gain access to the encryption keys and certificates within the UICC.

When PIN or password has been verified the UICC/Smart card will be requested for a key and/or certificate, and the file(s) will be encrypted with the assigned key and/or certificate.

The UICC/Smart card will function in the same way regardless of which device it is inserted into.

### DESCRIPTION OF FIGURES

Figure 1 is an overview of how a system design could look like for a UICC/Smartcard enabled mobile device. The device could contain the following:
   - A mobile device processor/CPU
   - Memory for storing/hosting applications
   - Memory for storing user data
   - A user interface that could be a screen, keypad or keyboard, microphone, speaker and/or other types of interfaces
   - A communication interface to the UICC/Smart card
      The UICC/Smart card could comprise the following parts:

   - A processor/CPU
   - ROM memory
   - RAM memory
   - Non-volatile memory
   - A communication interface
Figure 2 gives an overview of the system. The following elements are included:
   - A UICC/Smart Card enabled device, which is used for storing user data, more in particular a mobile wireless device such a PDA, Smartphone or a conventional mobile phone.
   - Within the mobile device, a software client of some sort is sending/receiving and/or just storing data, such data could be e-mail, SMS messages, MMS messages, calendar items etc. The client has the ability to communicate with the UICC/Smart Card and the key repository, either directly or through layers in the operating system of the mobile device.
   - The UICC/Smart Card, preferably running a SIM and/or a USIM application
   - The key repository function, running in the operating system of the UICC/Smart card, more particular as an applet.

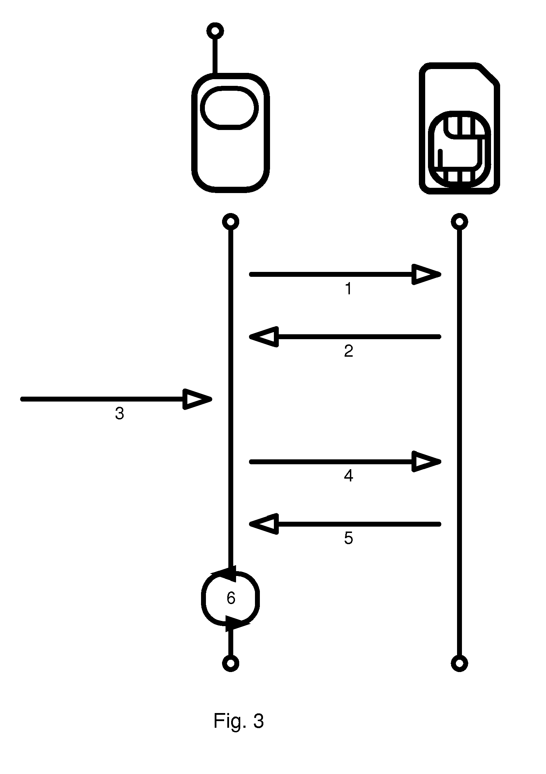

Figure 3 gives an example of how the communication flow of the system could be, when encrypting data. In the particular scenario an e-mail client running in the mobile device is using the key repository to securely store an e-mail.
Step 1. A first step is to authenticate the user, this is done by verifying a PIN, and the PIN is entered by the user.
Step 2. A response from the UICC/Smart Card is sent, either authenticating the user or denying access to the key repository
Step 3. Once the user is verified, the e-mail client will connect to a mail server to check for updates. A message is received by the mobile device and the e-mail client.
Step 4. The e-mail client requests an encryption key from the key repository on the UICC/Smart Card
Step 5. The key repository sends an encryption key with a specific ID to the e-mail client
Step 6. The e-mail client uses an encryption algorithm and the key given by the key repository to encrypt the e-mail and to store it securely in the mobile device

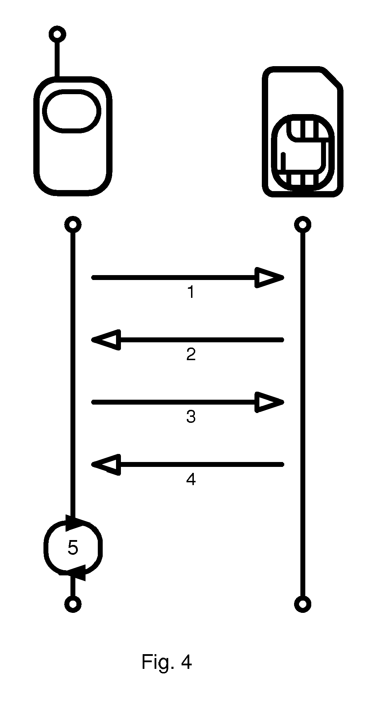

Figure 4 gives an example of how the communication flow of the system could be when decrypting data. In the particular scenario an e-mail client running in the mobile device is using the key repository to decrypt an e-mail already stored in the mobile device.
Step 1. The first step is to authenticate the user. This is done by verifying a PIN, and the PIN is entered by the user.
Step 2. A response from the UICC/Smart Card is sent, either authenticating the user or denying access to the key repository
Step 3. The e-mail client requests a decryption key from the key repository on the UICC/Smart Card
Step 4. The key repository sends a decryption key with a specific ID to the e-mail client
Step 5. The e-mail client uses an encryption algorithm and the key given by the key repository to decrypt the e-mail stored in the mobile device.

## Claims

1. A system for storing encrypted data, the system comprising:
a) a UICC/Smart Card enabled mobile device with a memory for storing data;
b) a UICC/Smart Card capable of hosting an application functioning as key repository;
c) a key repository application and encryption keys residing within the UICC/Smart Card;
d) a protocol for communicating data between the mobile device and the UICC/Smart Card.

2. A system according to claim 1, wherein the mobile device is capable of wirelessly communicating data such as documents, E-mails, SMS, MMS, pictures, sounds, music.

3. A UICC/Smart Card **characterized by** being capable of running a key repository function as an application storing encryption keys and/or certificates.

4. A UICC/Smart Card according to claim 3 wherein the key repository functionality residing within the UICC/Smart Card is loaded at production of the UICC/Smart Card, and after verification of password and/or PIN will give out encryption key and/or certificates upon request

5. A key repository functionality, residing within the UICC/Smart Card operating system that has a timing feature so that the password/PIN must be re-verified with defined intervals

6. A key repository functionality residing within the UICC/Smart Card operating system that has a timing feature that can be configured by the user to an interval

7. A key repository functionality residing within the UICC/Smart Card operating system that stores encryption keys and/or certificates securely so that they can only be retrieved from memory with the verification of password/PIN

8. A key repository functionality residing within the UICC/Smart Card operating system that can be configured with a set of commands, these commands and configurations can also be altered via remote technologies.

9. A method of encrypting data in a mobile device, the method comprising the following steps:
a) providing a UICC/Smart Card personalized with a set of encryption key or certificates so as to act as a key repository;
b) the mobile device authenticating a user to the key repository based on a password and/or PIN presented by the user;
c) the UICC/Smart Card verifying the password/PIN;
d) upon verifying the password/PIN the mobile device requesting an encryption key or certificate from the UICC/Smart Card;
e) the UICC/Smart Card responding by sending a key with the required specifications to the mobile device;
f) the mobile device encrypting, using the received key/certificate, the data; and
g) storing the encrypted data.

10. A method for decrypting data stored in a mobile device comprising the following steps:
a) providing a UICC/Smart Card personalized with a set of encryption key or certificates so as to act as a key repository;
b) the mobile device authenticating a user to the key repository based on a password and/or PIN presented by the user;
c) the UICC/Smart Card verifying the password/PIN;
d) upon verifying the password/PIN the mobile device requesting an encryption key or certificate from the UICC/Smart Card;
e) the UICC/Smart Card responding by sending a key with the required specifications to the mobile device;
f) the mobile device encrypting, using the received key/certificate, the data.
Some related patents that have been found; these patents have some relation to the field of invention, but are only given for information purposes.
US 2004/0206812 A1
US 7178724 B2 TW 588247B
